Europäisches Patentamt

European Patent Office

Office européen des brevets

(19)

(11) Numéro de publication: **0 065 099**
A2

## (12) DEMANDE DE BREVET EUROPEEN

(21) Numéro de dépôt: **82102758.8**

(22) Date de dépôt: **01.04.82**

(51) Int. Cl.³: **G 03 B 27/58**

(30) Priorité: **03.04.81 FR 8106732**

(43) Date de publication de la demande: **24.11.82**
**Bulletin 82/47**

(84) Etats contractants désignés: **CH DE GB IT LI**

(71) Demandeur: **Tekno AG, Lättichstrasse 8a, CH-6340 Baar (CH)**

(72) Inventeur: **Baliozian, Mardick, 15, route de Val Martin, Sainte-Gemme Feucherolles Yvelines (FR)**

(74) Mandataire: **Rossel, Albert, Dipl.-Ing. ETH et al, Stampfenbachstrasse 73, CH-8023 Zürich (CH)**

(54) Dispositif de calcul des caractéristiques géométriques de rectangles pour le cadrage d'objets divers.

(57) Dispositif de calcul des caractéristiques géométriques de rectangles pour le cadrage d'objets divers, utilisable notamment en photographie, architecture, design industriel.

Ce dispositif comprend une plaque (1) dans laquelle est ménagée une ouverture (4) de préférence carrée, et qui porte une graduation (5) indiquant une série de rapports entre les côtés contigus de rectangles, une réglette (6) montée pivotante sur la plaque (1) et graduée en longueur, et un élément (9) monté pivotant sur un coulisseau (11) déplaçable sur la réglette (6), l'élément (9) présentant deux branches perpendiculaires (12, 13) graduées en longueur, l'élément (9) pouvant être bloqué dans toute position angulaire voulue en fonction du rectangle à délimiter.

L'invention permet de cadrer aisément et avec précision des rectangles entre des limites prédéterminées, en indiquant instantanément à l'utilisateur les caractéristiques géométriques de ceux-ci.

"Dispositif de calcul des caractéristiques géométriques de rectangles pour le cadrage d'objets divers"

La présente invention a pour objet un dispositif de calcul des caractéristiques géométriques de rectangles, à savoir : le rapport des longueurs des côtés contigus du rectangle, la longueur de ses côtés, la longueur de sa diagonale et sa surface.

Ce dispositif est destiné à exécuter le cadrage de rectangles ou éventuellement de carrés de dimensions prédéterminées sur des documents ou objets divers tels que des photographies et des dessins,..., et est utilisable notamment en photographie, en architecture, en design industriel, en décoration etc...

Pour tracer des rectangles semblables de dimensions différentes, on peut tracer la diagonale du rectangle et ensuite en traçant des lignes à partir de différents points le long de cette diagonale dans des directions perpendiculaires aux côtés du rectangle, de sorte qu'on peut ainsi obtenir une infinité de rectangles semblables.

Pour ce faire, on peut utiliser une pièce en L en la faisant glisser le long de la diagonale du rectangle, et en veillant à ce que les deux branches du L soient toujours perpendiculaires aux côtés correspondants du rectangle qu'ils coupent.

Un tel dispositif permet de tracer des rectangles sur des objets tels que des photographies devant être reproduites sous un format déterminé.

Ce dispositif rudimentaire présente toutefois un très sérieux inconvénient, consistant dans le fait qu'il nécessite une partie mécanique matérialisant la diagonale, et qui traverse donc toute la zone à examiner, laquelle peut avoir des dimensions très réduites.

On connaît aussi une réalisation constituée par l'assemblage de deux pièces en L placées perpendiculairement l'une par rapport à l'autre, à des distances variables. Ce système peut présenter des graduations, mais ne permet pas de connaître instantanément les rapports entre les côtés des rectangles, ni de maintenir fermement une pièce en L par rapport à l'autre.

Un autre dispositif connu consiste en deux pièces en L qui peuvent glisser en translation l'une vers l'autre. Mais les rapports entre les côtés des différents rectangles obtenus restent toujours fixes avec un tel dispositif, ce qui constitue une insuffisance évidente.

Un autre dispositif connu, plus élaboré, comporte deux pièces en L dont l'une peut être déplacée par rapport à l'autre par glissement le long d'une tige métallique articulée à l'une de ses extrémités . Ce dispositif n'indique pas les rapports de deux côtés
adjacents du rectangle, ni la longueur de sa diagonale, ni sa surface,
et en outre est particulièrement encombrant et aussi pesant, par rapport
aux dimensions du rectangle à mesurer. Il ne permet pas non plus de déterminer mathématiquement les rapports des côtés d'un rectangle, et ne
peut être réglé de façon précise pour un rapport prédéterminé.

L'invention a pour but de remédier à ces inconvénients en réalisant
un dispositif permettant d'obtenir avec facilité tous les cadrages voulus dans une gamme prédéterminée, en obtenant immédiatement par simple
lecture toutes les caractéristiques géométriques du rectangle (ou du
carré) à cadrer, et ce sous un encombrement réduit.

Conformément à l'invention, le dispositif de détermination des
caractéristiques précitées d'un rectangle ou d'un carré comprend :

- une plaque présentant deux bords adjacents perpendiculaires,
dans laquelle est ménagée une ouverture de préférence carrée ou éventuellement rectangulaire, et qui porte une graduation indiquant une
série de rapports entre les côtés contigus des rectangles.

- une réglette montée à pivotement à l'une de ses extrémités sur
la plaque, dont la longueur est au moins égale à la diagonale de l'ouverture percée dans la plaque, l'extrémité de cette réglette pouvant
venir intersecter la graduation de rapports,

- un élément monté rotativement sur un coulisseau susceptible de
se déplacer sur la réglette et pourvu de branches perpendiculaires ayant
des longueurs égales à celles des côtés de l'ouverture de la plaque,

- au moins deux côtés de l'ouverture de la plaque, les branches
de l'élément pivotant et la réglette étant gradués en longueur.
Lorsqu'on veut cadrer dans une proportion désirée une partie d'un objet
avec ce dispositif, par exemple une partie d'une photographie que l'on
désire agrandir, on place tout d'abord la réglette graduée dans la position
angulaire convenable, l'intersection de l'extrémité de la réglette avec
la graduation des rapports indiquant la valeur du rapport des côtés contigus des différents rectangles pouvant être cadrés pour cette position
angulaire de la réglette.

Puis on place et on bloque l'élément pivotant de façon à placer
les deux branches de celui-ci perpendiculairement aux deux côtés contigus de l'ouverture de la plaque, on déplace ensuite le coulisseau sur
la réglette avec l'élément pivotant.

Ensuite, on déplace ce dernier sur la réglette jusqu'à ce que les branches de l'élément pivotant fixé au coulisseau, cadrent, avec les deux autres côtés perpendiculaires de l'ouverture de la plaque, la partie sélectionnée de la photographie ou du dessin.

Il ne reste plus qu'à bloquer le coulisseau sur la réglette, et l'on peut lire sur les graduations du dispositif toutes les caractéristiques numériques du rectangle ainsi sélectionné : longueur des côtés, longueur de sa diagonale lue sur la réglette, rapport de ses côtés lu directement sur les graduations de rapport et sa surface qui peut être lue sur sur une table imprimée sur la plaque.

Ce dispositif présente un minimum d'encombrement, est d'un usage extrêmement simple et permet la détermination des caractéristiques d'un rectangle quelconque dans la gamme choisie permise par les dimensions de l'ouverture avec toute la précision nécessaire.

D'autres particularités et avantages de l'invention apparaîtront au cours de la description qui va suivre, faite en référence aux dessins annexés qui en représentent une forme de réalisation non limitative.

La Figure 1 est une vue en plan de la plaque et de l'élément pivotant associé,

La Figure 2 est une vue de dessus en plan de la réglette graduée devant être montée rotativement sur la plaque de la Figure 1,

La Figure 3 est une vue de dessous en plan de la réglette de la Figure 2,

La Figure 4 est une vue de dessus du dispositif complet formé par l'assemblage des différents pièces visibles aux Figures 1 et 2,

La Figure 5 est une vue en perspective partielle montrant le coulisseau disposé sur la réglette et l'élément pivotant articulé sur ce coulisseau.

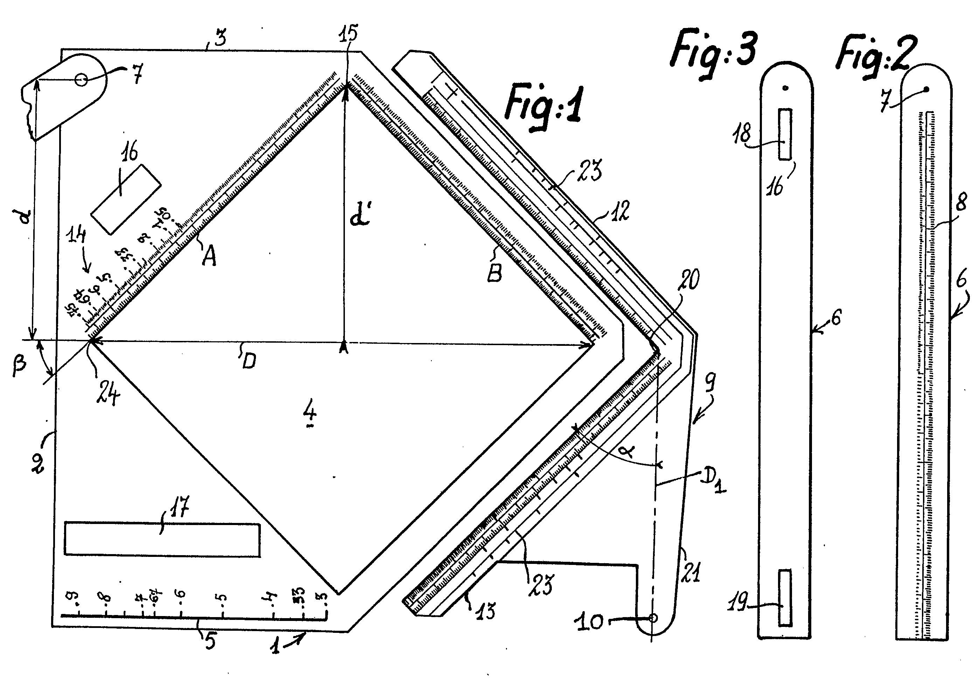

Le dispositif illustré aux Figures 1 à 5 est destiné au calcul de certaines caractéristiques d'un rectangle ou d'un carré, et peut être utilisé notamment en photographie, en architecture, en design industriel, etc... pour cadrer des objets dans le rectangle choisi, par exemple des parties de photographies que l'on désire reproduire et agrandir.

Les caractéristiques géométriques des rectangles considérés sont : le rapport des longueurs de ses côtés contigus, la longueur de ses côtés, la longueur de sa diagonale et sa surface.

Ce dispositif comprend :

a.- une plaque 1 présentant deux bords adjacents 2, 3 perpendiculaires et dans laquelle est ménagée une ouverture 4, de préférence carrée

4

comme dans l'exemple représenté, mais qui peut éventuellement être rectangulaire ; cette plaque 1 porte une graduation 5 indiquant une série de rapports entre les côtés de rectangles correspondants, allant de 0,3 à 0,9. Cette graduation peut également aller jusqu'à 1, ce qui correspondrait à un carré.

b.- une réglette 6 montée à pivotement à l'une de ses extrémités sur la plaque 1, autour d'un axe de pivot 7, et dont la longueur est au moins égale à la diagonale (D) de l'ouverture 4, l'extrémité de la réglette 6 pouvant venir intersecter la graduation 5 ; la réglette 6 porte une graduation 8 en centimètres et/ou en "pouces" (système anglo-saxon).

c.- un élément 9 monté rotativement sur un coulisseau 11 susceptible de se déplacer sur la réglette 6, et pourvu de deux branches perpendiculaires 12, 13 ayant des longueurs égales à celles des côtés A, B de l'ouverture 4.

Plus précisément, les branches 12, 13 portent des graduations centimétriques et, dans l'exemple représenté, en pouces, dont la longueur totale est égale à celles des graduations correspondantes imprimées sur les côtés A, B. On notera qu'une graduation 14 de rapports des deux côtés contigus de rectangles est portée le long du côté A et s'échelonne de 0,05 à 0,75, cette graduation venant compléter la graduation 5.

Suivant une caractéristique importante de l'invention, l'axe de pivotement 7 de la réglette 6 est séparé du prolongement d'une diagonale D de l'ouverture 4 par une distance d égale à l'intervalle d' entre le sommet 15 de l'ouverture 4 situé du même côté de la diagonale D que l'axe 7, et ladite diagonale D.

Ainsi, l'axe 7 de pivotement de la réglette 6 peut se déplacer sur une droite parallèle à D et passant par le sommet 15, mais il doit toujours être distant de l'intervalle d = d' de la diagonale D.

L'invention prévoit également des moyens mécaniques pour bloquer la réglette 6 sur la plaque 1 dans la position angulaire choisie. Ces moyens peuvent être par exemple constitués par des plaquettes 16, 17 collées sur la plaque 1 dans la zone balayée par la réglette 6, et des plaquettes correspondantes 18, 19 collées sous la réglette 6. Ces pièces peuvent porter des éléments d'accrochage sensibles à la pression, tels que le système connu sous la marque "Velcro", les pièces 16, 17 étant par exemple les parties femelles, et les pièces 18,19 les parties mâles. Mais bien entendu ces éléments de blocage de

5

la réglette 6 peuvent être remplacés par tout autre système approprié fonctionnant par pression.

Le coulisseau 12 peut être bloqué sur la réglette 6 au moyen d'un bouton moleté 21, tandis que l'élément 9 peut être fixé dans une position angulaire quelconque par rapport au coulisseau 11 au moyen d'un bouton rotatif 22 traversant l'élément 9 et le coulisseau 11.

Les branches 12,13 portent des graduations 23 telles que des longueurs focales correspondant à différents formats tels que 35 mm, 24 x 36, 6 x 7 cm de films sur lesquels doit être photographié un objet localisé à l'intérieur du rectangle délimité par les deux branches mobiles 12, 13 et les côtés complémentaires A, B de l'ouverture 4.

Sur la plaque 1 est également imprimée ou collée une table numérique non représentée pour simplifier le dessin, indiquant les sur - faces des rectangles susceptibles d'être obtenus avec ce dispositif, en déplaçant les branches 12, 13 parallèlement respectivement aux côtés A et B.

Il convient de noter que l'ouverture carrée 4 (ou le cas échéant rectangulaire) est orientée de façon que ses côtés (A, B) soient inclinés à 45 degrés sur les bords adjacents (2, 3) de la plaque 1.

L'axe de rotation 10 de l'élément 9 est situé à une distance de l'intersection 20 des branches 12, 13 égale à la distance entre l'axe 7 et le sommet 15 de l'ouverture 4. De plus, l'angle $\alpha$ entre la droite D1 reliant 10 et 20, et le bord gradué de la branche 13, est égal à l'inclinaison $\beta$ des côtés A et B sur les bords 2, 3.

La mise en oeuvre et les avantages techniques du dispositif qui vient d'être décrit sont les suivants :

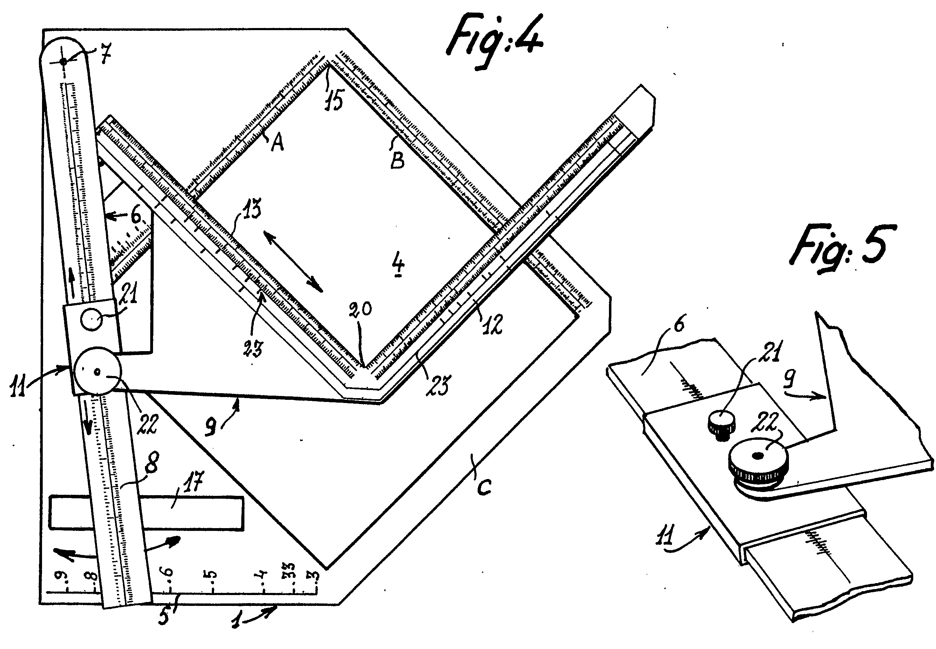

On place tout d'abord la réglette 6 dans la position angulaire correspondant à la valeur du rapport entre deux côtés contigus du rectangle que l'on désire obtenir, lu sur la graduation 5. Ainsi, dans la position de la réglette 6 illustrée à la Figure 4, le rapport lu sur la graduation 5 à l'intersection avec la réglette 6 est légèrement inférieur à 0,8. On verrouille alors la réglette 6 dans cette position par pression sur les pièces 16, 17 qui viennent s'accrocher dans les pièces correspondantes 18, 19.

Puis on fait glisser le coulisseau 11 sur la réglette 6 de façon à placer la branche 12 sur le côté C de l'ouverture 4, parallèlement à celui-ci et au côté A. Tout en maintenant d'une main les branches 12, 13 dans cette position, dans laquelle elles délimitent un rectangle avec les côtés A et B, l'opérateur bloque l'élément 9 en rotation par rapport au coulisseau 11, en vissant le bouton moleté 22.

On peut alors faire glisser simultanément l'élément 9 et le coulisseau 11 dont il est solidaire, le long de la réglette 6. Lors de ce déplacement le long de la réglette 6, l'élément 9 délimite avec les parties A et B comprises entre le sommet 15 et les branches 12, 13, une série de rectangles semblables. On cadre ainsi en positionnant de façon appropriée la plaque 1 et l'élément 9 la partie du document (texte ou photographie) qui intéresse l'opérateur. Lorsque ce cadrage est obtenu, il suffit de visser le bouton 21 pour bloquer le coulisseau sur la réglette 6.

L'opérateur peut alors lire sur les graduations des côtés A, B et 12, 13 du rectangle obtenu la longueur et la largeur de celui-ci, tandis que la position du coulisseau 11 lui permet de lire sur la réglette 6 la longueur de la diagonale du rectangle, la graduation 5 ou 14 lui donnant le rapport des côtés contigus de ce rectangle comme indiqué ci-dessus, et la table numérique imprimée ou collée sur la plaque 1 lui indiquant la surface du rectangle compte-tenu de sa diagonale et de ses proportions.

Complémentairement, les graduations 23 indiquent à l'opérateur la longueur focale de l'objectif à utiliser pour l'appareil de reproduction ou de projection de l'objet délimité dans le rectangle obtenu.

La mise en oeuvre de ce dispositif est donc extrêmement simple, et fournit instantanément à l'utilisateur toutes les données numériques dont il a besoin pour effectuer un cadrage quelconque, à l'intérieur de la gamme correspondant aux dimensions de l'ouverture 4. Toutes les lectures sur les graduations peuvent être effectuées de manière suffisamment précise, grâce en particulier aux moyens de blocage de la réglette 6 et de l'élément pivotant 9 dans les positions angulaires choisies.

De plus, ce système présente un encombrement minimum, très inférieur à celui de la réalisation antérieure connue, à pièce en L coulissant sur une tige pivotante.

L'invention n'est pas limitée à la forme de réalisation décrite et peut comporter de nombreuses variantes d'exécution. Ainsi, il est évident que les dimensions de l'ouverture 4 et la longueur de la réglette 6 n'ont été données qu'à titre d'exemple, et que tous moyens de blocage équivalents à ceux décrits peuvent être utilisés pour verrouiller en position la réglette, l'élément pivotant 9 et le coulisseau 11.

7

La plaque 1, l'élément 9 et la réglette 6 peuvent être, soit en matière plastique soit métalliques, le coulisseau 11 étant de préférence métallique.

8

## REVENDICATIONS

1.- Dispositif de calcul des caractéristiques de rectangles ou de carrés, à savoir le rapport des longueurs de ses côtés contigus, les longueurs de ses côtés , la longueur de sa diagonale et sa surface, destiné au cadrage de rectangles de dimensions prédéterminées, utilisable notamment en photographie, architecture, design industriel, caractérisé en ce qu'il comprend :

    a.- une plaque (1) présentant deux bords adjacents perpendiculaires (2,3) dans laquelle est ménagée une ouverture (4) de préférence carrée et éventuellement rectangulaire et qui porte au moins une graduation (5) indiquant une série de rapports entre les côtés de rectangles correspondants,

    b.- une réglette (6) montée à pivotement à l'une de ses extrémités sur la plaque (1) et dont la longueur est au moins égale à la diagonale (D) de l'ouverture (4) percée dans la plaque (1), l'extrémité de cette réglette (6) pouvant venir intersecter la graduation de rapports (5),

    c.- un élément (9) monté rotativement sur un coulisseau (11) susceptible de se déplacer sur la réglette (6), et pourvu de deux branches (12, 13) perpendiculaires ayant des longueurs égales à celles des côtés (A, B) de l'ouverture (4) de la plaque (1),

    d.- au moins deux côtés de l'ouverture (4) de la plaque (1), les branches (12, 13) de l'élément pivotant (9) et la réglette (6) étant gradués en longueur.

2.- Dispositif selon la revendication 1, caractérisé en ce que des moyens mécaniques sont prévus pour bloquer la réglette (6) sur la plaque (1) dans la position angulaire choisie, ainsi que le coulisseau (11) dans une position angulaire telle que ses branches (12, 13) sont perpendiculaires aux côtés voisins (A, B) de l'ouverture de la plaque (1) et délimitent avec ses côtés un rectangle, dont les caractéristiques sont ainsi fonction, d'une part de la position angulaire de la réglette graduée (6) et d'autre part de la position du coulisseau (11) sur cette réglette (6), lesdits moyens consistant pour la réglette (6) en des pièces complémentaires fixées à celle-ci et à la plaque (1) à des distances convenables de l'axe de rotation (7) de la réglette (6).

3.- Dispositif selon la revendication 2, caractérisé en ce que l'axe de pivotement de la réglette (6) est séparé d'une diagonale (D)

9

de l'ouverture (4) de la plaque (1) par une distance (d) égale à l'intervalle (d') entre le sommet (15) de l'ouverture (4) situé du même côté de la diagonale (D) que l'axe de pivotement (7) et ladite diagonale (D).

4.- Dispositif selon l'une des revendications 1 à 3, caractérisé en ce qu'au moins l'une des branches (12, 13) de l'élément pivotant (9) porte des graduations (23) de longueurs focales correspondant à différents formats de films sur lesquels doit être photographié un objet situé à l'intérieur du rectangle délimité par les deux branches mobiles (12, 13) et les côtés contigus (A, B) de l'ouverture de la plaque (1).

5.- Dispositif selon l'une des revendications 1 à 4, caractérisé en ce que l'ouverture carrée ou rectangulaire (4) est formée de façon que ses côtés (A, B) soient inclinés à 45° sur les bords adjacents (2, 3) de la plaque (1).

6.- Dispositif selon l'une des revendications 1 à 5, caractérisé en ce que l'axe de rotation (10) de l'élément (9) est situé à une distance de l'intersection (20) des branches (12, 13) de cet élément égale à la distance (d) entre l'axe de pivotement (7) de la réglette (6), et le sommet (15) voisin de l'ouverture (4), et l'angle ($\alpha$) entre la droite (D1) reliant l'axe de rotation (10) et l'intersection (20) précités et le bord gradué de la branche (13) contigue, est égal à l'inclinaison ($\beta$) des côtés (A), (B) sur les bords (2, 3) de la plaque (1).

Fig:1

Fig:2

Fig:3

**Fig. 5**

**Fig. 4**